# EUROPÄISCHE PATENTSCHRIFT

(11) **EP 2 523 827 B1**
(45) Veröffentlichungstag und Bekanntmachung des Hinweises auf die Patenterteilung: **22.04.2015**
(21) Anmeldenummer: 11700890.4
(22) Anmeldetag: 11.01.2011
(51) Int. Cl.: B60N 2/58, B60R 13/02, B68G 7/10, D05B 11/00, D05B 31/02

(54) **FÜHRUNGSMITTEL MIT TOLERANZKOMPENSATION FÜR VERNÄHUNG VON DEKORELEMENTEN**
GUIDE MEANS FOR COMPENSATING TOLERANCES WHEN STITCHING TOGETHER DECORATIVE ELEMENTS
DISPOSITIF DE GUIDAGE AVEC COMPENSATION DE TOLERANCES POUR LA COUTURE DES ÉLÉMENTS DÉCORATIFS

(30) Priorität: 11.01.2010 DE 102010004288
(43) Veröffentlichungstag der Anmeldung: 21.11.2012
(73) Patentinhaber: Faurecia Innenraum Systeme GmbH, 76767 Hagenbach (DE)
(72) Erfinder: PENISCH, Thomas, 76187 Karlsruhe (DE)
(74) Vertreter: Schatt, Markus F.
(86) Internationale Anmeldenummer: PCT/EP2011/000085
(87) Internationale Veröffentlichungsnummer: WO 2011/083098

(56) Entgegenhaltungen:
- US-A- 2 682 844

## Beschreibung

Die Erfindung betrifft ein Führungsmittel für die Führung eines länglichen Zwischenelementes bei der Verbindung von wenigstens zwei Dekorelementen über dieses Zwischenelement und ein Verfahren zum Verbinden von wenigstens zwei Dekorelementen über ein Zwischenelement.

Führungsmittel für die Verbindung von wenigstens zwei Dekorelementen über ein Zwischenelement sind grundsätzlich bekannt und werden beispielsweise verwendet, um zum Beispiel Zwischenelemente in Form von Paspeln oder Kedern zwischen zwei Dekorelementen, beispielsweise Lederschichten zu vernähen. Die Paspel oder Keder befindet sich dabei nach dem Vernähen üblicherweise auf der Sichtseite eines Dekorteils bestehend aus den beiden Dekorelementen und des Zwischenelementes. Nachteilig bei den bekannten Führungsmitteln ist, dass teilweise große Toleranzen, insbesondere Toleranzadditionen in Kauf genommen werden müssen. So sind bei bekannten Zwischenelementen, insbesondere Paspeln oder Kedern Toleranzen in deren Fertigung von bis zu ±1 mm und mehr üblich.

Die US 2 682 844 A beschreibt ein Führungsmittel zur Einführung eines länglichen Zwischenelementes zwischen wenigstens zwei Dekorelementen zur Verbindung derselben, wobei das Führungsmittel aufweist:
eine erste Anschlagsfläche zum Anlegen eines ersten Dekorelements und eine zweite Anschlagsfläche zum Anlegen eines zweiten Dekorelements,
eine von der Anschlagseite abstehende Führungsschiene mit einem entlang der Anschlagseite verlaufenden Innenraum, der in seinem inneren Verlauf zumindest teilweise der Außenkontur des Zwischenelementes entspricht, wobei die Führungsschiene mit einem Endbereich, der der Anschlagseite gegenüber liegt, den Innenraum abschließt und eine Eintrittsöffnung und eine Austrittsöffnung für das Zwischenelement, die jeweils an seitlichen Enden des Endbereichs gelegen sind, aufweist,
ein Kompensationsmittel zur Kompensation von Lagetoleranzen des Zwischenelementes, das zwischen einer zwischen der ersten Anschlagsfläche und der zweiten Anschlagsfläche gelegenen Bereich der Anschlagseite und dem in den Innenraum eingeführten Zwischenelement gelegen ist, um das Zwischenelement in einem Abstand zu der Anschlagseite zu halten, so dass das Kompensationsmittel eine Kraft auf das Zwischenelement ausüben kann, um das Zwischenelement zumindest gegen den Endbereich der Führungsschiene zu drücken und auf diese Weise die relative Position des Zwischenelements zu dem ersten und dem zweiten Anschlag zu definieren.

Die Aufgabe der vorliegenden Erfindung ist,ein ein Führungsmittel für die Führung eines länglichen Zwischenelementes bei der Verbindung von wenigstens zwei Dekorelementen über dieses Zwischenelement sowie ein Verfahren zum Verbinden von wenigstens zwei Dekorelementen über ein Zwischenelement bereitzustellen, das jeweils ein passgenaues Positionieren des Zwischenelements zwischen den Dekorelementen erlaubt.

Die voranstehende Aufgabe wird gelöst durch ein Führungsmittel mit den Merkmalen den unabhängigen Anspruchs 1 sowie durch ein Verfahren mit den Merkmalen des unabhängigen Anspruchs 10. Weitere Ausführungsformen der Erfindung sind in den auf die unabhängigen Ansprüche rückbezogenen Unteransprüchen angegeben.

Die Verwendung von Hohlrohren bzw. Hohlprofilen als Führungen für die Zwischenelemente wie z.B. Paspeln oder Keder sind so vorzusehen, dass dem Zwischenelement etwas Spiel in diesem Hohlprofil, bereit gestellt wird, da ansonsten ein Verklemmen die Bewegung des Zwischenelementes in der Führungsschiene verhindern würde. Das Spiel innerhalb des Führungsprofiles kann dabei ebenfalls bis zu 1 mm hinsichtlich der maximalen Abmessung der Paspel oder der Keder betragen. Damit addiert sich das Spiel innerhalb der Führungsschiene zu dem notwendigerweise vorhandenen Fertigungstoleranzbereich von ±1 mm. Ein auf diese Weise hergestelltes Dekorteil weist den Nachteil auf, dass das sichtbare Ende des Keders, der Paspel oder der Bise auf der Sichtseite des Dekorteils ungleichmäßig hervorsteht. Dies erzeugt ein unruhiges und ungleichmäßiges Erscheinungsbild, was unter anderem auch als Qualitätsmangel wahrgenommen wird. Beim fertigen Dekorteil ist dies insbesondere dann nachteilig, wenn ein möglichst gleichmäßiger Übergang zwischen den beiden Dekorelementen, beispielsweise Lederschichten, gewünscht wird. In einem solchen Fall ist ein Vorstehen der Paspel oder der Keder über die beiden Dekorschichten auf deren Sichtseite unerwünscht. Insbesondere kann ein Vorstehen der Paspel oder der Keder dazu führen, dass ein unerwünscht hoher Abrieb an der Paspel oder dem Keder vorherrscht. Neben der optischen Beeinträchtigung entsteht somit auch ein Qualitätsverlust aus haptischer Sicht. Bei der Verwendung solcher Dekorteile im Fahrzeugbau, insbesondere in der Innenverkleidung, sind wegen der hervorstehenden Paspel oder einen Keder insbesondere verschleißanfällig.

Ein erfindungsgemäßes Führungsmittel für die Führung eines länglichen Zwischenelementes bei der Verbindung von wenigstens zwei Dekorelementen oder Zuschnitten von Dekormaterial über dieses Zwischenelement weist dabei insbesondere die folgenden Merkmale auf:
- einen ersten Anschlag für ein erstes Dekorelement,
- einen zweiten Anschlag für ein zweites Dekorelement,
- eine Führungsschiene, welche in ihrem inneren Verlauf zumindest teilweise der Aussenkontur des Zwischenelementes entspricht, wobei die Führungsschiene eine Eintrittsöffnung und eine Austrittsöffnung für das Zwischenelement aufweist,
- ein Kompensationsmittel zur Kompensation von Dimensionstoleranzen des Zwischenelementes,

Dabei kann das Kompensationsmittel eine Kraft auf das Zwischenelement ausüben, so dass dieses Zwischenelement zumindest gegen einen Bereich der Führungsschiene gedrückt wird und das Zwischenelement auf diese Weise in seiner relativen Position zu dem ersten und dem zweiten Anschlag definiert ist.

Bei einem erfindungsgemäßen Führungsmittel ist von entscheidendem Vorteil, dass ein Kompensationsmittel vorgesehen ist, welches in der Lage ist, die Fertigungstoleranzen des Zwischenelementes hinsichtlich der relativen Position des Zwischenelementes zu den beiden Dekorelementen zu kompensieren. Diese Kompensation findet dabei ausschließlich durch die Positionierung des Zwischenelementes statt, so dass auf zusätzliche Fertigungsschritte, wie beispielsweise ein Zuschneiden des Zwischenelementes verzichtet werden kann. Ein weiterer Vorteil eines erfindungsgemäßen Führungsmittels ist die Tatsache, dass die exakte Ausrichtung und damit die reduzierten Toleranzen beim Verbinden der Dekorelemente über das Zwischenelement hinsichtlich der Position des Zwischenelementes in einem einzigen Schritt durchgeführt werden können. Somit wird neben dem konstruktiven Zusatzaufwand eines zweiten Schrittes auch der zusätzliche Zeitaufwand eines solchen Zusatzschrittes mit einem erfindungsgemäßen Führungsmittel vermieden.

Weiter ist darauf hinzuweisen, dass unter den Begriffen "erster Anschlag" und "zweiter Anschlag" auch ein gemeinsamer Anschlag, welcher die Funktion eines ersten und zweiten Anschlages für die beiden Dekorelemente beinhaltet, zu verstehen ist.

Beispielsweise kann ein gemeinsamer Anschlag durch eine Anschlagsplatte gebildet sein, auf welcher darüber hinaus auch noch die Führungsschiene angeordnet sein kann. Somit ist es möglich ein kompaktes System mit der hohen Funktionalität eines erfindungsgemäßen Führungsmittels auszustatten. Selbstverständlich ist die vorliegende Erfindung nicht auf zwei Dekorelemente beschränkt, sondern kann vielmehr auch für eine Mehrzahl von Dekorelementen verwendet werden.

In einem ersten Schritt ist dabei unerheblich, ob das Kompensationsmittel Fertigungstoleranzen des Zwischenelementes nur in eine oder mehrere Dimensionen ausgleicht. Insbesondere kann es jedoch vorteilhaft sein, wenn die Dimensionstoleranzen der Fertigung des Zwischenelementes in Richtung der Sichtseite des herzustellenden Dekorteils ausgeglichen werden. Weiter ist grundsätzlich unerheblich, auf welche Art die Kraft auf das Zwischenelement ausgeübt wird. So sind unterschiedlichste Möglichkeiten denkbar, um mittels des Kompensationsmittels Kraft aufzuwenden. Auch die Kraftrichtung ist für die Funktionsweise der Erfindung unerheblich. So kann beispielsweise alternativ oder zusätzlich zu einer Druckkraft auch eine Zugkraft, je nach Konstruktion des Führungsmittels, auf das Zwischenelement ausgeübt werden. Unter der Bezeichnung "drückende Kraft" ist also auch eine ziehende Kraft zu verstehen, welche eine relative Positionierung des Zwischenelementes innerhalb der Führungsschiene ermöglicht.

Weiter kann es von Vorteil sein, wenn das Zwischenelement bei einem erfindungsgemäßen Führungsmittel gegen einen Bereich der Führungsschiene drückt, welcher wenigstens einem der Anschläge für die Dekorelemente entgegengesetzt ist. Insbesondere beim Einsatz eines erfindungsgemäßen Führungsmittels bei der Herstellung von Dekorteilen für den Innenbereich von Kraftfahrzeugen ist üblicherweise ein, im Hinblick auf seine Breite, relativ kleines Zwischenelement mit, im Hinblick ebenfalls auf ihre Breite, relativ großen Dekorelementen zu verbinden. Dabei sind nach dieser vorteilhaften Ausgestaltungsform die Anschläge der Dekorelemente sozusagen entgegengesetzt zum Anschlag. Die Ausrichtung der Anschläge definiert somit die relative Position des Zwischenelementes zu den Dekorelementen am fertigen Dekorteil. Dabei kann es vorteilhaft sein, wenn der Bereich der Führungsschiene, gegen welchen das Kompensationsmittel das Zwischenelement drückt, in seiner relativen Position hinsichtlich des ersten und des zweiten Anschlages reversibel einstellbar ist. Beispielsweise ist eine Variation über Schiebemechanismen oder feststellbare Langlochsysteme denkbar. Mittels solcher Vorrichtungen kann mit einem erfindungsgemäßen Führungsmittel eine Vielzahl von unterschiedlichen Zwischenelementen in einem einzigen Führungsmittel verwendet werden. Auch die gewünschte Verbindungstoleranz kann auf diese Weise eingestellt werden. So können auf der einen Seite im Wesentlichen bündig mit den beiden Dekorelementen verbundene Zwischenelemente, wie auch hervorstehende Zwischenelemente ausgeführt werden.

Auch Führungsschienen mit Innenkonturen, welche derart an die Aussenkontur des Zwischenelementes angepasst sind, dass durch das Kompensationsmittel eine Linienberührung zwischen Zwischenelement und Führungsschiene entsteht, können vorteilhaft sein. Solche Linienberührungen dienen der relativen Positionierung des Zwischenelementes ohne dessen Bewegung während des Verbindungsprozesses zu beeinträchtigen, insbesondere ohne eine Verklemmung des Zwischenelementes in der Führungsschiene zu erzeugen.

Ein weiterer Vorteil kann es sein, wenn bei einem erfindungsgemäßen Führungsmittel zumindest der Teil des Zwischenelementes gegen einen Bereich der Führungsstelle gedrückt wird, welcher nach dem Verbinden der beiden Dekorelemente über das Zwischenelement auf der Sichtseite liegt. Die Sichtseite bezieht sich dabei auf den fertigen Einbau beispielsweise im Innenraum eines Kraftfahrzeuges. Auf diese Weise kann eine definierte Relativposition der auf der Sichtseite gelegenen Teile des Zwischenelementes, beispielsweise der Paspel oder dem Keder, zu den Dekorelementen erzeugt werden. Diese Sichtseite ist üblicherweise die für den Nutzer eines erfindungsgemäßen Führungsmittels maßgebende Seite weshalb diese Seite von einer derartigen Ausführungsform besonders beachtet wird.

Weiter kann es vorteilhaft sein, wenn das Kompensationsmittel Toleranzen, insbesondere Längentoleranzen des Zwischenelementes von bis zu 4 mm ausgleichen kann. Längentoleranzen beziehen sich dabei insbesondere auf die Dimension des Zwischenelementes im Wesentlichen senkrecht zu der Verbindungsstelle insbesondere der Verbindungsnaht. Auch geringere Kompensationen sind bei geringeren Fertigungstoleranzen des Zwischenelementes denkbar. Besonders hervorzuheben ist die Tatsache, dass das Kompensationsmittel nur vorhandene Dimensionsabweichungen ausgleicht. Für Zwischenelemente oder Bereiche des Zwischenelementes, welche innerhalb der geforderten Verbindungstoleranz liegen, muss auch keine Kompensation durchgeführt werden.

Weiter kann es vorteilhaft sein, wenn die Führungsschiene eines erfindungsgemäßen Führungsmittels das Zwischenelement an drei Seiten kontaktierend umgibt und das Kompensationsmittel an der vierten Seite vorgesehen ist. Die Führungsschiene bildet sozusagen eine geometrische Abbildung des Profils des Zwischenelementes und dient zur kontaktierenden Führung des Zwischenelementes im Führungsmittel. Ein Verklemmen des Zwischenelementes im Führungsmittel ist auf diese Weise verhindert, da auf der vierten Seite über das Kompensationsmittel ausreichend Spiel vorhanden ist, um gegen das Kompensationsmittel ein Verklemmen des Zwischenelementes zu verhindern. Dabei ist insbesondere darauf zu achten, dass die Kraft, mittels welcher das Kompensationsmittel auf das Zwischenelement drückt, einerseits ausreichend groß ist, um eine ausreichend sichere Definition der relativen Position des Zwischenelementes zu erzielen. Andererseits muss sicherstellt sein, dass ein Verklemmen des Zwischenelementes in der Führungsschiene durch die Kraft des Kompensationsmittels vermieden wird.

Da es sich bei der Führungsschiene um ein dreidimensionales Teil handelt, ist noch darauf hinzuweisen, dass die vier Seiten in einer Ebene zu verstehen sind. Dabei sind drei Seiten durch die kontaktierende Umgebung des Zwischenelements und die vierte Seite durch das Kompensationsmittel definiert. Die beiden zu diesen vier Seiten senkrecht ausgerichteten Richtungen der Führungsschiene sind offen, um auf der einen Seite in der Eintrittsöffnung und auf der anderen Seite in der Austrittsöffnung zu münden. Entlang einer Linie senkrecht zu den, durch die vier Seiten gebildeten Ebene, verläuft die Bewegungsrichtung des Zwischenelementes innerhalb der Führungsschiene. Mit anderen Worten definieren die vier Seiten gleichzeitig die Profilseiten der Führungsschiene.

Bei erfindungsgemäßen Führungsmitteln kann es vorteilhaft sein, wenn diese dafür ausgelegt sind, für ein Zwischenelement in Form einer Paspel oder eines Keders oder einer Biese verarbeiten zu können, welche/r nach der Verbindung der Dekorelemente über das Zwischenelement an der Sichtseite des Dekorteils liegt. Insbesondere bei der Verwendung von Paspeln oder Kedern oder Biesen ist die Kompensation von Fertigungstoleranzen von großer Bedeutung, da die Fertigung dieser Zwischenelemente aufgrund von Materialstärken, insbesondere bei Leder- oder Stoffvarianten, großen Toleranzen unterliegt. Darüber hinaus sind gerade solche Elemente jedoch hinsichtlich ihrer Belastbarkeit auf Reibung und dem damit einhergehenden Verschleiß besonders anfällig. Bei der Verwendung von Paspeln oder Kedern oder Biesen als Zwischenelemente ist ein erfindungsgemäßes Führungsmittel daher besonders vorteilhaft.

Das Kompensationsmittel von erfindungsgemäßen Führungsmitteln kann beispielsweise ein Federelement aufweisen. Ein solches Federelement ist dabei zum Beispiel als Blattfeder oder auch als Spiralfeder oder eine Kombination verschiedener Federelemente ausführbar. In Form einer Blattfeder kann insbesondere über einen längeren Bereich entlang der Führungsschiene eine Kompensation, also eine Krafteinbringung auf das Zwischenelement, ausgeübt werden. Jedoch kann zusätzlich zu dem Federelement auch ein weiteres Element, beispielsweise ein Dämpfungselement vorgesehen sein, um beispielsweise eine Schwingung bei stark variablen Fertigungstoleranzen innerhalb eines Zwischenelementes auszugleichen. Ein solches Dämpfungselement kann beispielsweise dazu dienen, ein Überschwingen der Kompensation und damit eine Verschlechterung des Toleranzkompensationsausgleiches zu verhindern.

Bei einem erfindungsgemäßen Führungsmittel kann es weiter vorteilhaft sein, wenn der Abstand zwischen der Austrittsöffnung der Führungsschiene für das Zwischenelement und einer Verbindungsstelle bei in eine Verbindungsvorrichtung eingesetztem Führungsmittel im Bereich des Ein- bis Zehnfachen der Materialstärke eines der Dekorelemente liegt. Befindet sich die Materialstärke eines der Dekorelemente beispielsweise bei 0,5 mm, so liegt der Abstand zwischen der Austrittsöffnung der Führungsschiene und der Verbindungsstelle im Bereich zwischen 0,5 und 5 mm.

Insbesondere ist dieser Abstand jedoch auf ein Minimum zu reduzieren. Bei idealen Ausführungsformen liegt dieser Abstand bei nahezu 0 mm. Dieser Abstand ist insbesondere daher relevant, da nach dem Verlassen der Führungsschiene das Zwischenelement wieder ohne Führung seine relative Position zu den Dekorelementen variieren kann. Je länger dieser Abstand ist, also je länger die Bewegung des Zwischenelementes ohne Führung stattfindet, umso größere Abweichungen der relativen Position des Zwischenelementes von der Definition durch die Führungsschiene können wieder entstehen. Ein weiter Vorteil eines geringen Abstandes ist die vereinfachte und auch verbesserte Herstellbarkeit von Verbindungen in Radienform. So kann mittels einem erfindungsgemäßen Führungsmittel beispielsweise auch eine gekrümmte Naht hergestellt werden und somit Dekorteile mit komplexen Geometrien mit den erfindungsgemäßen Vorteilen ausgestattet werden. In einigen Ausführungsformen kann es sogar möglich sein, dass die Führungsschiene zumindest teilweise über die Verbindungsstelle in einer Verbindungsvorrichtung hinausragt und somit eine Überschneidung des geführten Bereichs mit dem bereits verbundenen Bereich entsteht. Eine solche Ausführungsform ist insbesondere hinsichtlich einer Verbindung mittels Nähten bei Nähmaschinen an die Transportvorrichtung unterhalb der Nahtstelle angepasst.

Um ein Verklemmen des Kompensationsmittels in der Führungsschiene noch unwahrscheinlicher zu machen, kann es vorteilhaft sein, wenn bei einem erfindungsgemäßen Führungsmittel die Oberfläche des Kompensationsmittels zumindest in dem Bereich, in welchem es mit dem Zwischenelement in Kontakt kommt, einen Gleitreibungskoeffizienten von weniger als 0,7 mit der Oberfläche des Zwischenelementes aufweist. Grundsätzlich ist die Reduktion des Gleitreibungskoeffizienten auf ein Minimum sinnvoll, da neben einem Verklemmen auch unnötiger Kraftaufwand für das Führen des Zwischenelementes in der Führungsschiene vermieden werden kann. Die Reduktion des Gleitreibungskoeffizienten kann einerseits durch die Oberflächenbearbeitung des Kompensationsmittels erfolgen. Möglich ist jedoch auch eine Beschichtung, beispielsweise mittels reibungsminimierender Stoffe, zum Beispiel Teflon.

Gegenstand der vorliegenden Erfindung ist auch ein Verfahren mit den Merkmalen des Anspruchs 10 zum Verbinden von wenigstens zwei Dekorelementen über ein Zwischenelement. Das Verfahren weist inbesondere die folgenden Schritte auf:
- Anlegen des ersten Dekorelementes an einen ersten Anschlag eines Führungsmittels,
- Anlegen des zweiten Dekorelementes an einen zweiten Anschlag des Führungsmittels,
- Einführen des Zwischenelementes in eine Führungsschiene des Führungsmittels mit einem Kompensationsmittel zur Kompensation von Dimensionstoleranzen des Zwischenelementes,
- Gleichzeitiges und kontinuierliches Bewegen der beiden Dekorelemente und des Zwischenelementes in eine gemeinsame Richtung,
- Verbinden der beiden Dekorelementen über das Zwischenelement in Bewegungsrichtung der Dekorelemente und des Zwischenelementes.

Bei einem erfindungsgemäßen Verfahren ist von Vorteil, dass, wie voranstehend ausführlich zum erfindungsgemäßen Führungsmittel beschrieben, mögliche Fertigungstoleranzen des Zwischenelementes unabhängig von deren Größe, in einem solchen Verfahren reduziert werden und damit das entstehende Dekorteil als Produkt optisch und haptisch verbessert wird.

Bei einem erfindungsgemäßen Verfahren kann es vorteilhaft sein, wenn ein erfindungsgemäßes Führungsmittel, wie voranstehend beschrieben, zum Einsatz kommt.

Weiter ist Gegenstand der vorliegenden Erfindung eine Verbindungsvorrichtung, welche zumindest ein erfindungsgemäßes Führungsmittel aufweist. Eine solche Verbindungsvorrichtung kann beispielsweise in Form einer Nähmaschine zur Verbindung in Form von Nähten ausgeführt sein.

Die vorliegende Erfindung wird näher erläutert anhand der Zeichnungsfiguren. Bei der Beschreibung der Zeichnungsfiguren beziehen sich die Begriffe "rechts", "links", "oben", "unten" auf die Figuren in einer Ausrichtung mit normal lesbaren Bezugszeichen. Es zeigen:
- Fig. 1: einen Querschnitt durch eine Ausführungsform eines erfindungsgemäß hergestellten Dekorteils mit einem Keder.
- Fig. 2: einen Querschnitt durch ein Dekorteil ähnlich Fig. 1 mit einer Paspel.
- Fig. 3: im Querschnitt zwei Zwischenelemente mit einem Keder und einer Paspel.
- Fig. 4: im Querschnitt ein erfindungsgemäßes Führungsmittel gemäß einer Ausführungsform mit eingelegten Dekorelementen und eingelegtem Zwischenelement.
- Fig. 5: Seitenansicht eines erfindungsgemäßen Führungsmittels in einer Verbindungsvorrichtung gemäß einer Ausführungsform.
- Fig. 6: weitere Ausführungsform alternativ zu der Ausführungsform gemäß Fig. 5.
- Fig. 7: isometrische Ansicht einer weiteren Ausführungsform eines erfindungsgemäßen Führungsmittels.

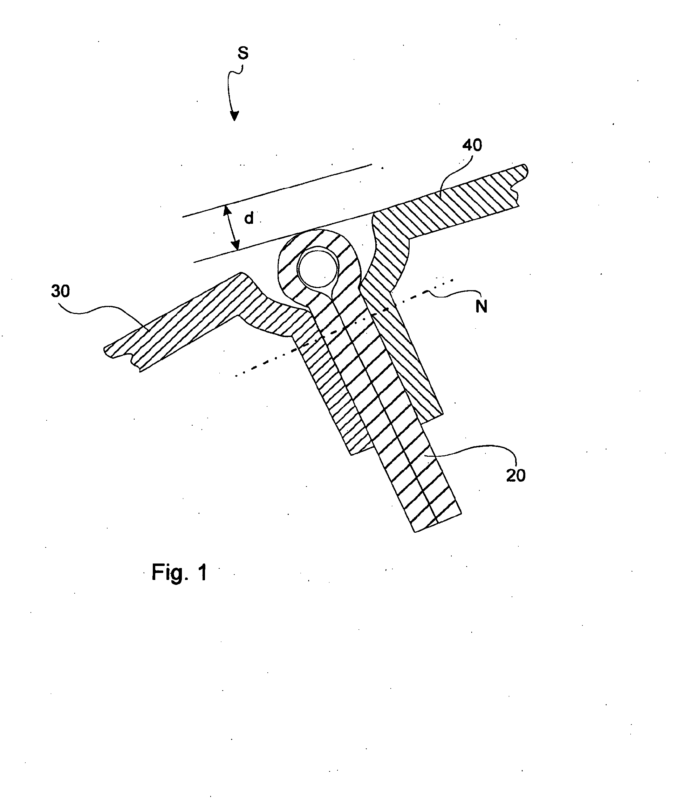

Fig. 1 zeigt im Querschnitt ein Dekorteil, welches aus einem ersten Dekorelement 30 und einem zweiten Dekorelement 40 über ein Zwischenelement oder Zwischenstück 20 zusammengesetzt ist. Insbesondere ist vorgesehen, die Dekorzuschnitte miteinander zu verbinden und insbesondere zu vernähen. Dabei wird eine Nahtfahne oder ein Dekorelement, z.B. das Dekorelement 30, mit einer Nahtfahne oder einem Dekorelement, z.B. dem Dekorelement 40 verbunden oder vernäht. Die jeweilige Nahtfahne ist ein Bereich des jeweiligen Dekorzuschnitts, der entlang jeweils eines Randabschnitts eines Dekorzuschnitts verläuft.

Das Zwischenelement 20 ist hierbei als Keder ausgeführt. Die Nahtstelle N läuft in einem Bereich, welcher nicht sichtbar ist und von der Sichtseite S abgewandt ist. Die beiden Dekorelemente 30 und 40 bilden eine von der Sichtseite S weg gewölbte Vertiefung, in welcher der Keder des Zwischenelementes 20 zu liegen kommt. Für den Nutzer eines Kraftfahrzeuges, in welchem ein solches Dekorteil verbaut ist, ist es von entscheidender Bedeutung, wie weit der Keder über die Oberfläche der Sichtseite der Dekorelemente 30 und 40 übersteht. Dieser Überstand ist in Fig. 1 mit dem Buchstaben d bezeichnet und ist definiert als die Verbindungstoleranz auf der Sichtseite bezüglich der beiden Dekorelemente 30 und 40 und des Zwischenelementes 20. Je größer die Verbindungstoleranz d ist, umso weiter kann bei der Fertigung des Dekorteiles das Zwischenelement 20, insbesondere der Keder des Zwischenelements 20 über die Oberfläche des Dekorteils auf der Sichtseite herausstehen. Dieses Herausstehen erzeugt einerseits eine minderwertigere Qualitätsanmutung aus optischer und haptischer Sicht, andererseits einen erhöhten Verschleiß durch die erhöhte Reibung an dem Keder des Zwischenelementes 20. Die Verbindungstoleranz d ist demnach auf ein Minimum zu reduzieren.

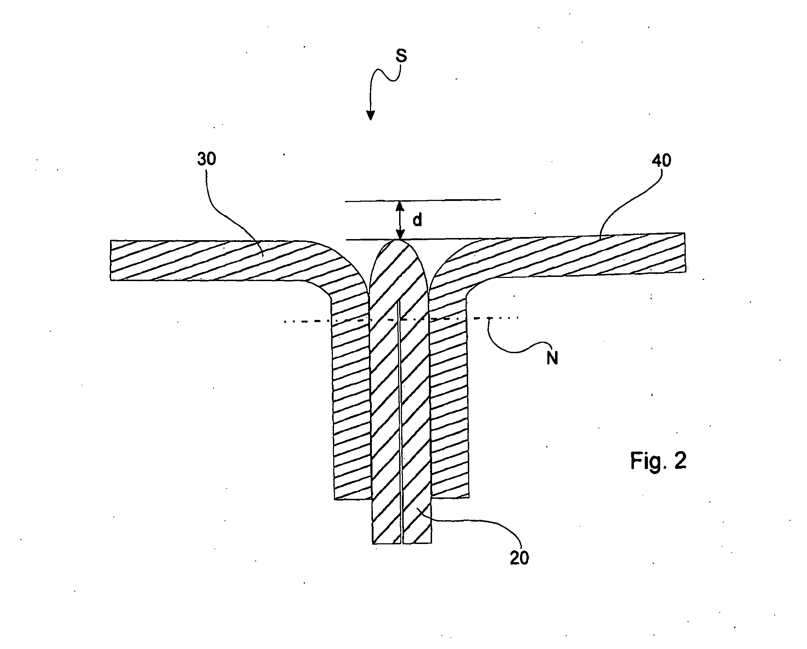

Fig. 2 zeigt eine ähnliche Ausführungsform wie Fig. 1, jedoch wurde hier ein Zwischenelement 20 mit einer Paspel verwendet. In diesem Fall ist die Vertiefung, welche durch die beiden Dekorelemente 30 und 40 gebildet wird, in die im Vergleich zu Fig. 1 entgegensetzte Richtung gewölbt. Auch hier ist wieder eine Verbindungstoleranz d definiert, welche den Überstand der Paspel des Zwischenelementes 20 über die Dekorelemente 30 und 40 bestimmt. Auf der Sichtseite S des Dekorteils ist somit auch hier ein minimales Überstehen der Paspel des Zwischenelementes gewünscht. Auch hier ist eine Nahtstelle N auf der der Sichtseite S des Dekorteils gegenüber liegenden Seite vorgesehen.

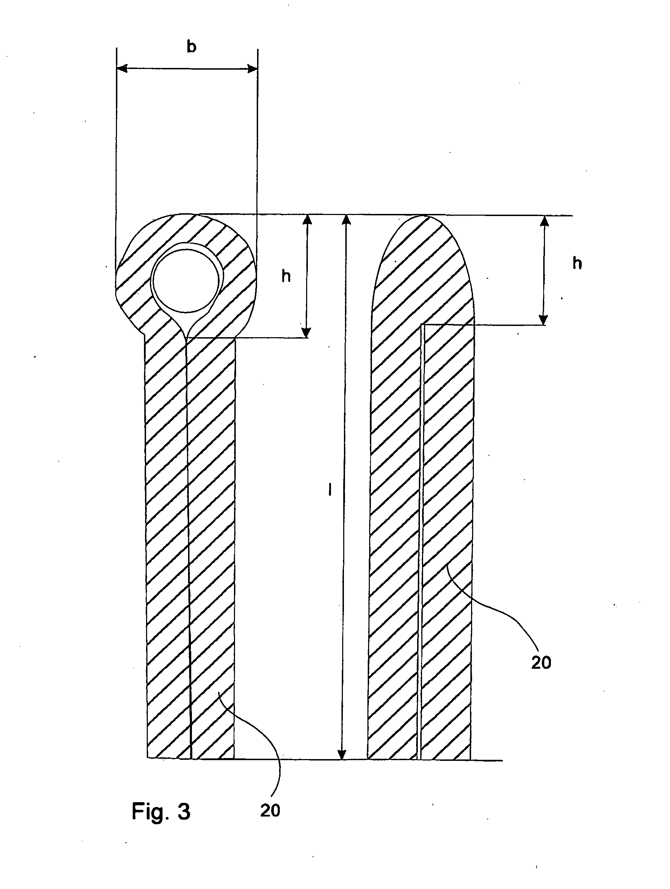

Fig. 3 zeigt die beiden Zwischenelemente 20 der beiden Figuren 1 und 2 nebeneinander separat, also ohne Dekorelemente 30 und 40, nämlich einmal mit Paspel und einmal mit Keder.

Das linke der beiden Zwischenelement 20 in Fig. 3 weist einen Keder mit einer Seele in Form eines Stahlseils auf. Die geometrische Abmessung dieses Zwischenelementes 20 weist eine Länge I, sowie hinsichtlich des Keders eine Breite b und eine Höhe h auf. Die Breite und die Höhe und insbesondere die Länge des Zwischenelementes 20 sind dabei Fertigungstoleranzen unterlegen, welche beispielsweise durch unterschiedliche Materialstärken oder Verklebungstoleranzen beim Falten des Zwischenelementes 20 entstehen.

Auch bei dem rechts abgebildeten Zwischenelement 20 mit einer Paspel ist die Höhe h der Paspel selbst und die Länge des Zwischenelementes 20 Fertigungstoleranzen unterlegen. Insbesondere hinsichtlich der Länge I, welche bei der Verwendung für Innendekorteile zum Beispiel ca. 12 mm betragen kann, müssen teilweise Fertigungstoleranzen von bis zu ±1 mm in Kauf genommen werden. Mit anderen Worten bedeutet dies im gegebenen Beispiel, dass die Länge I zwischen 11 mm und 13 mm schwankt. Beim Einsatz dieser Zwischenelemente 20 zur Verbindung zwischen zwei Dekorelementen 30 und 40 kann es nun dazu kommen, dass bei je nach Ausrichtung der Zwischenelemente 20 an der Oberfläche der Dekorelemente 30 oder 40 entweder die Paspel oder der Keder in einer Vertiefung zurücksteht oder aus dieser um bis zu 2 mm hervorsteht. Jedoch ist üblicherweise aus den bereits genannten Gründen eine deutlich geringere Toleranz für das Vorstehen der Paspel oder des Keders gefordert. Insbesondere sind für die Verbindungstoleranz d = 0,8 mm, oder mit anderen Worten ± 0,4 mm einzuhalten. Um dies zu erzielen, ist es notwendig, bei der Verbindung der beiden Dekorelemente 30 und 40 über das Zwischenelement 20 diese Fertigungstoleranzen zu kompensieren.

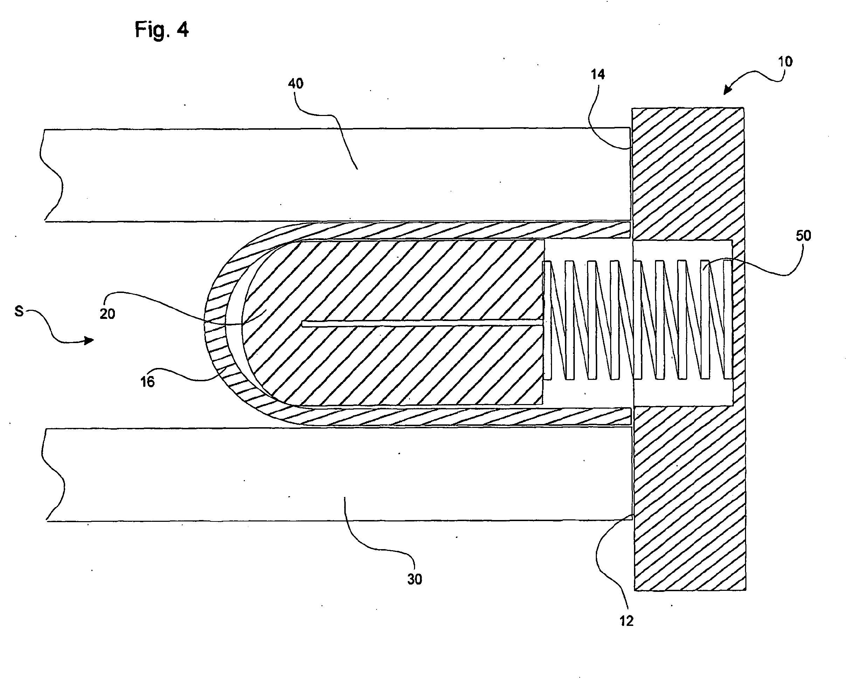

Eine solche Kompensation wird mittels eines erfindungsgemäßen Führungsmittels 10 ermöglicht, wie es in Fig. 4 in einer Ausführungsform dargestellt ist. Das Führungsmittel 10 gemäß Fig. 4 weist zwei Anschläge 12 und 14 auf, welche hier als ein gemeinsamer Anschlag ausgeführt sind. An diesen Anschlägen 12 und 14 liegen die Stöße der Dekorelemente 30 und 40, beispielsweise einer unteren und einer oberen Lederschicht, an. Die beiden Dekorelemente 30 und 40 können entlang der Anschläge 12 und 14 bewegt werden, wobei die Bewegungsrichtung im Wesentlichen senkrecht zu der Zeichnungsebene der Fig. 4 verläuft. Zwischen den beiden Dekorelementen 30 und 40 liegt eine Führungsschiene 16. Diese Führungsschiene 16 ist als Hohlprofil ausgeführt und beinhaltet bereits ein eingelegtes Zwischenelement 20. Das Zwischenelement 20 wird von einem Kompensationsmittel 50 an das ein inneres Ende des Hohlprofils der Führungsschiene 16 gedrückt. Dabei verbleibt ein Spalt im Bereich der Spitze zwischen Führungsschiene 16 und Zwischenelement 20 und die Kraft des Kompensationsmittels 50 schiebt das Zwischenelement 20 zwischen schmalen Bereichen an der Oberseite und der Unterseite der Spitze des Profils der Führungsschiene 16. Auf diese Weise wird ein Verklemmen des Zwischenelementes 20 vermieden.

Das Kompensationsmittel 50 ist hier in Form einer Spiralfeder ausgeführt. Die Spiralfeder ist an ihrer rechten Seite in einer Vertiefung im gemeinsamen Anschlag des Führungsmittels 10 fixiert. An der linken Seite, welche in Kontakt mit dem Zwischenelement 20 tritt, ist eine Führungsplatte, welche in dieser Zeichnung nicht dargestellt ist, vorgesehen, welche hinsichtlich ihrer Oberflächenbeschaffenheit für eine reduzierte Gleitreibung zwischen der Führungsplatte und dem Zwischenelement 20 optimiert ist. Auch das Zwischenelement 20 kann sich entlang einer Bewegungslinie bewegen, welche im Wesentlichen senkrecht zur Zeichnungsebene der Fig. 4 verläuft. Die Spitze der Führungsschiene 16 liegt als Anschlag entgegengesetzt zu den beiden Anschlägen 12 und 14 der beiden Dekorelemente 30 und 40.

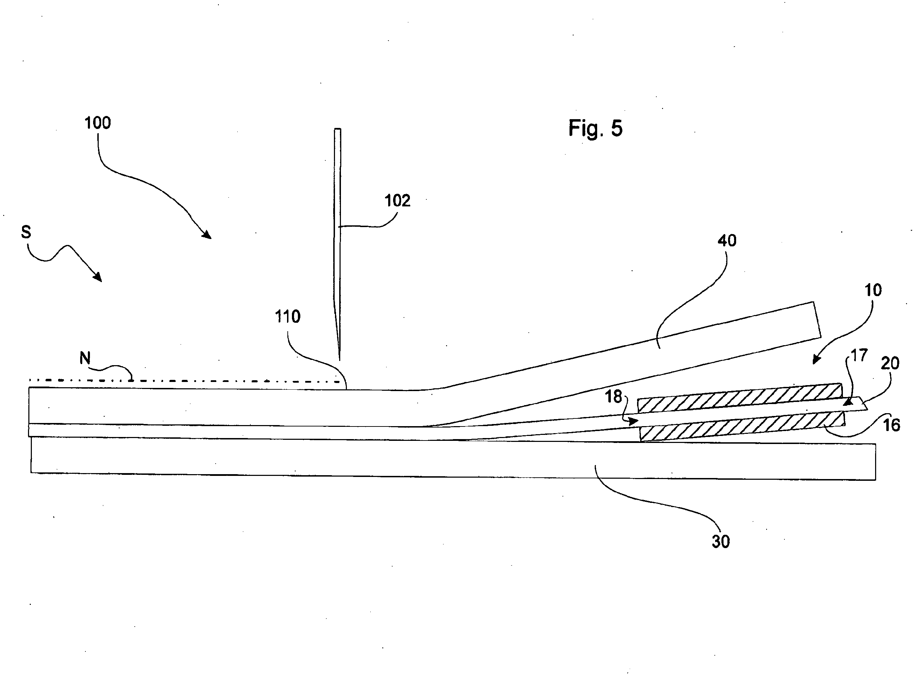

Fig. 5 zeigt eine Ausführungsform einer erfindungsgemäßen Verbindungsvorrichtung 100. Die Verbindungsvorrichtung 100 weist ein Verbindungsmittel 102, hier in Form einer Nadel, auf. Die Nadel kann durch die Dekorelemente 30 und 40 sowie durch das Zwischenelement 20 hindurch stechen und erzeugt eine Naht N. Die Naht verläuft entlang der Bewegungsrichtung der Dekorelemente 30 und 40 und des Zwischenelementes 20, in Fig. 5 nach links. Die Naht beginnt an der Verbindungsstelle 110, an welcher das Verbindungsmittel 102, also die Nadel, durch die beiden Dekorelemente 30 und 40 und das Zwischenelement 20 dringt.

Auf der rechten Seite der Fig. 5 ist ein erfindungsgemäßes Führungsmittel 10 zu erkennen. Das Führungsmittel 10 ist hier im Querschnitt zu sehen und hat eine ähnliche Ausbildung wie jenes in Fig. 4 dargestellte. Das Führungsmittel 10 hat eine Führungsschiene 16 mit einer Eintrittsöffnung 17 für das Zwischenelement 20 und einer Austrittsöffnung 18 für das Zwischenelement 20. Fig. 5 zeigt eine Momentaufnahme während des Produktionsprozesses. Dabei laufen die beiden Dekorelemente 30 und 40 sowie das Zwischenelement 20 aufeinander zu, geführt durch das Führungsmittel 10, hinsichtlich des Zwischenelementes 20 insbesondere geführt durch die Führungsschiene 16. Der Produktionsprozess des Dekorteils verläuft in Fig. 5 von rechts nach links. Nachdem die drei Elemente, also Zwischenelement 20 und Dekorelemente 30 und 40 zueinander geführt worden sind und vor allem zu einander relativ durch die beiden Anschläge 12 und 14 sowie die Führungsschiene positioniert worden sind, kann die Verbindung hergestellt werden.

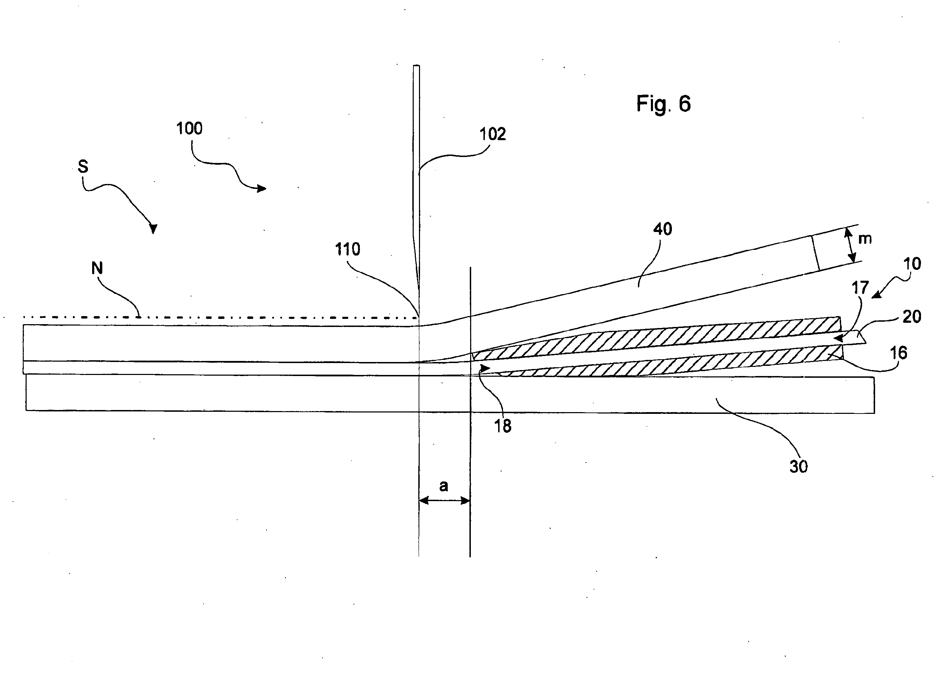

Fig. 6 zeigt eine weitere Ausführungsform der vorliegenden Erfindung ähnlich der Ausführungsform der Fig. 5. Auch hier ist eine Verbindungsvorrichtung 100 mit einem Verbindungsmittel 102 in Form einer Nadel vorgesehen. Jedoch ist hier der Beginn der Naht N an der Verbindungsstelle 110 deutlich näher an der Austrittsöffnung 18 der Führungsschiene 16 vorgesehen. Der Abstand a zwischen der Austrittsöffnung 18 und der Verbindungsstelle 110 ist minimiert. In diesem Fall ist der Abstand a identisch mit der Materialstärke m des zweiten Dekorelementes 40. Um dies zu erreichen, ist einerseits das Führungsmittel 10 deutlich weiter an die Verbindungsstelle 110 herangeführt. Darüber hinaus ist die Führungsschiene 16 derart ausgeführt, dass sie aufgrund keilförmiger Bereiche im Verlauf der Führungsschiene 16 näher an die Verbindungsstelle 110 herangeführt werden kann. Auf diese Weise ist der Abstand a, welcher das Zwischenelement 20 ungeführt lässt, minimiert und damit die relative Positionierung des Zwischenelementes an der Verbindungsstelle noch genauer.

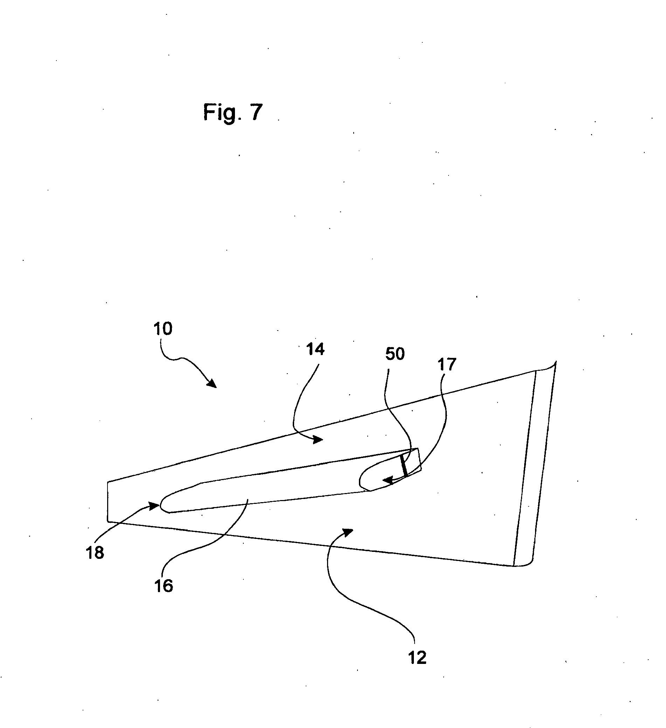

Zur weiteren Veranschaulichung zeigt Fig. 7 eine isometrische Darstellung einer Ausführungsform eines Führungsmittels 10. Hier zeigen sich die Vorteile des Führungsmittels 10. In einem einzigen, beispielsweise einteiligen, im Wesentlichen dreieckig ausgestalteten Führungsmittel 10 sind sowohl die beiden Anschläge 12 und 14 für die Dekorelemente 30 und 40 vorgesehen, wie auch eine Führungsschiene 16 für das Zwischenelement 20. Die Führungsschiene 16 weist eine Eintrittsöffnung 17 und eine Austrittsöffnung 18 auf, durch welche das Zwischenelement 20 durch die Führungsschiene 16 bewegt werden kann. Innerhalb der Führungsschiene 16 ist ein Kompensationsmittel 50 vorgesehen, welches eine Ausführungsform ähnlich der Fig. 4, das Zwischenelement 20 gegen die Führungsschiene 16 in entgegengesetzter Richtung zu den beiden Anschlägen 12 und 14 drücken kann.

### BEZUGSZEICHEN

- 10: Führungsmittel
- 12: erster Anschlag
- 14: zweiter Anschlag
- 16: Führungsschiene
- 17: Eintrittsöffnung
- 18: Austrittsöffnung
- 20: Zwischenelement
- 30: erstes Dekorelement
- 40: zweites Dekorelement
- 50: Kompensationsmittel
- 100: Verbindungsvorrichtung
- 102: Verbindungsmittel
- 110: Verbindungsstelle
- d: Verbindungstoleranz auf der Sichtseite
- a: Abstand zwischen Austrittsöffnung und Verbindungsstelle
- b: Breite des Zwischenelementkopfes
- l: Länge des Zwischenelementes
- h: Höhe des Zwischenelementkopfes
- m: Materialstärke eines Dekorelementes
- S: Sichtseite
- N: Verbindungsnaht

## Patentansprüche

1. Führungsmittel (10) zur Einführung eines länglichen Zwischenelementes (20) zwischen wenigstens zwei Dekorelementen (30,40) zur Verbindung derselben, wobei das Führungsmittel (10) aufweist:
eine Anschlagsplatte mit einer sich flächig erstreckenden Anschlagseite (12,14), die aus einer ersten Anschlagsfläche (12) zum Anlegen eines ersten Dekorelements (30) und aus einer zweiten Anschlagsfläche (14) zum Anlegen eines zweiten Dekorelements (40) gebildet ist,
eine von der Anschlagseite (12,14) der Anschlagsplatte abstehende Führungsschiene (16) mit einem entlang der Anschlagseite (12,14) verlaufenden Innenraum, der in seinem inneren Verlauf zumindest teilweise der Außenkontur des Zwischenelementes (20) entspricht, wobei die Führungsschiene (16) mit einem Endbereich, der der Anschlagseite (12, 14) gegenüber liegt, den Innenraum abschließt und eine Eintrittsöffnung (17) und eine Austrittsöffnung (18) für das Zwischenelement (20), die jeweils an seitlichen Enden des Endbereichs gelegen sind, aufweist,
ein Kompensationsmittel (50) zur Kompensation von Lagetoleranzen des Zwischenelementes (20), das zwischen einem zwischen der ersten Anschlagsfläche (12) und der zweiten Anschlagsfläche (14) gelegenen Bereich der Anschlagseite (12,14) und dem in den Innenraum eingeführten Zwischenelement (20) gelegen ist, um das Zwischenelement (20) in einem Abstand zu der Anschlagseite zu halten, so dass das Kompensationsmittel (50) eine Kraft auf das Zwischenelement (20) ausüben kann, um das Zwischenelement (20) zumindest gegen den Endbereich der Führungsschiene (16) zu drücken und auf diese Weise die relative Position des Zwischenelements (20) zu dem ersten (12) und dem zweiten Anschlag (14) zu definieren.

2. Führungsmittel (10) nach dem Anspruch 1, wobei die Führungsschiene (16) das Zwischenelement (20) an drei Seiten kontaktierend umgibt und das Kompensationsmittel (50) an der vierten Seite vorgesehen ist.

3. Führungsmittel (10) nach einem der voranstehenden Ansprüche, wobei die Verbindung der wenigstens zwei Dekorelemente (30, 40) über das Zwischenelement (20) mittels einer Naht (N) realisiert ist.

4. Führungsmittel (10) nach einem der Ansprüche 1 bis 3, wobei das Zwischenelement (20) eine Paspel aufweist, die nach der Verbindung der Dekorelemente (30,40) mit dem Zwischenelement (20) an der Sichtseite liegt.

5. Führungsmittel (10) nach einem der Ansprüche 1 bis 3, wobei das Zwischenelement (20) einen Keder aufweist, der nach der Verbindung der Dekorelemente (30, 40) mit dem Zwischenelement (20) an der Sichtseite liegt.

6. Führungsmittel (10) nach einem der Ansprüche 1 bis 3, wobei das Zwischenelement (20) eine Biese aufweist, die nach der Verbindung der Dekorelemente (30,40) mit dem Zwischenelement (20) an der Sichtseite liegt.

7. Führungsmittel (10) nach einem der voranstehenden Ansprüche, wobei das Kompensationsmittel (50) ein Federelement aufweist.

8. Führungsmittel (10) nach einem der voranstehenden Ansprüche, wobei der Abstand zwischen der Austrittsöffnung (18) der Führungsschiene (16) für das Zwischenelement (20) und einer Verbindungsstelle (110) bei in eine Verbindungsvorrichtung (100) eingesetztem Führungsmittel (10) im Bereich des 1- bis 10-fachem der Materialstärke eines der Dekorelemente (30,40) liegt.

9. Führungsmittel (10) nach einem der voranstehenden Ansprüche, wobei die Oberfläche des Kompensationsmittels (50) zumindest im dem Bereich, in welchem es mit dem Zwischenelement (20) in Kontakt kommt, einen Gleitreibungskoeffizienten von weniger als 0,70 mit der Oberfläche des Zwischenelements (20) aufweist.

10. Verfahren zum Verbinden von wenigstens zwei Dekorelementen (30, 40) über ein Zwischenelement (20) mittels eines Führungsmittels (10) nach einem der vorstehenden Ansprüche, das Verfahren aufweisend die folgenden Schritte:
Anlegen eines ersten Dekorelementes (30) an eine erste Anschlagsfläche (12), die Teil einer sich flächig erstreckenden Anschlagseite (12, 14) eines Führungsmittels (10) ist,
Anlegen des zweiten Dekorelementes (40) an eine zweite Anschlagsfläche (14), die Teil der Anschlagseite (12,14) des Führungsmittels (10) ist,
Einführen des Zwischenelementes (20) in eine von der Anschlagseite (12,14) der Anschlagsplatte abstehende Führungsschiene (16) des Führungsmittels (10) mit einem entlang der Anschlagseite (12,14) verlaufenden Innenraum, der in seinem inneren Verlauf zumindest teilweise der Außenkontur des Zwischenelementes (20) entspricht, wobei die Führungsschiene (16) mit einem Endbereich, der der Anschlagseite (12, 14) gegenüber liegt, den Innenraum abschließt und eine Eintrittsöffnung (17) und eine Austrittsöffnung (18) für das Zwischenelement (20), die jeweils an seitlichen Enden des Endbereichs gelegen sind, aufweist, wobei das Führungsmittel (10) ein Kompensationsmittel (50) zur Kompensation von Lagetoleranzen des Zwischenelementes (20) aufweist, das zwischen einem zwischen der ersten Anschlagsfläche (12) und der zweiten Anschlagsfläche (14) gelegenen Bereich der Anschlagseite (12,14) und dem in den Innenraum eingeführten Zwischenelement (20) gelegen ist,
Gleichzeitiges und kontinuierliches Bewegen der beiden Dekorelemente (30, 40) und des Zwischenelementes (20) in eine gemeinsame Richtung, wobei das Kompensationsmittel (50) eine Kraft auf das Zwischenelement (20) ausübt, um das Zwischenelement (20) zumindest gegen den Endbereich der Führungsschiene (16) zu drücken und auf diese Weise die relative Position des Zwischenelements (20) zu dem ersten (12) und dem zweiten Anschlag (14) zu definieren,
Verbinden der beiden Dekorelemente (30, 40) über das Zwischenelement (20) in Bewegungsrichtung der Dekorelemente (30, 40) und des Zwischenelementes (20) mittels der Naht (N).

11. Verfahren nach dem Anspruch 10, wobei das Verbinden der wenigstens zwei Dekorelemente (30, 40) über das Zwischenelement (20) mittels einer Naht (N) erfolge.

12. Verfahren nach einem der Ansprüche 10 oder 11, wobei das Kompensationsmittel (50) ein Federelement aufweist.

13. Verfahren nach einem der Ansprüche 10 bis 12, wobei das Zwischenelement (20) eine Paspel aufweist, die nach der Verbindung der Dekorelemente (30, 40) mit dem Zwischenelement (20) an der Sichtseite liegt.

## Claims

1. Guiding means (10) for inserting an elongated intermediate element (20) between at least two decoration elements (30,40) for connecting said decoration elements (30,40), wherein the guiding means (10) comprises:
a stop plate with a planar extending stop side (12,14), which is formed of a first stop surface (12) for abutting a first decoration element (30) and a second stop surface (14) for abutting to a second decoration element (40),
a guiding rail (16) protruding from the stop side (12, 14) of the stop plate, comprising an interior space running along the stop side (12, 14), with an inner extension corresponding at least partially to the outer contour of the intermediate element (20), wherein the guiding rail (16) closes the interior space with an end portion lying opposite to the stop side (12,14), and wherein the guiding rail (16) comprises an inlet opening (17) and an exit opening (18) for the intermediate element (20), each of which lying on lateral ends of the end portion,
a compensation means (50) for compensating positional tolerances of the intermediate element (20) which is located between an area of the stop side (12,14) lying between the first stop surface (12) and the second stop surface (14) and the intermediate element (20) inserted into the inner space, in order to hold the intermediate element (20) distanced from the stop side (12,14), so that the compensation means (50) can exert a force on the intermediate element (20) to press the intermediate element (20) against at least the end portion of the guiding rail (16), and in that way to define the position of the intermediate element (20) relative to the first stop surface (12) and to the second stop surface (14).

2. Guiding means (10) according to claim 1, wherein the guiding rail (16) encloses the intermediate element (20) on three sides in a contacting manner, and the compensation means (50) is provided at the fourth side.

3. Guiding means (10) according one of the preceding claims, wherein the connection of the at least two decoration elements (30, 40) is implemented through the intermediate element (20) via a seam (N).

4. Guiding means (10) according one of the claims 1 to 3, wherein the intermediate element (20) comprises a piping which lies on the visible side after the connection of the decoration elements (30, 40) with the intermediate element (20).

5. Guiding means (10) according one of the claims 1 to 3, wherein the intermediate element (20) comprises a welt which lies on the visible side after the connection of the decoration elements (30, 40) with the intermediate element (20).

6. Guiding means (10) according one of the claims 1 to 3, wherein the intermediate element (20) comprises a tuck which lies on the visible side after the connection of the decoration elements (30, 40) with the intermediate element (20).

7. Guiding means (10) according one of the preceding claims, wherein the compensation means (50) comprises a spring element.

8. Guiding means (10) according one of the preceding claims, wherein the distance between the exit opening (18) of the guiding rail (16) for the intermediate element (20) and a connection site (110) is in the range of the multiple of 1 to the multiple of 10 of the material thickness of one of the decoration elements (30, 40), when the guiding means (10) is applied in a connection device (100).

9. Guiding means (10) according one of the preceding claims, wherein the surface of the compensation means (50) in at least the area in which it is in contact with the intermediate element (20) comprises a coefficient of sliding friction of less than 0,7 with relative to the surface of the intermediate element (20).

10. Method for connecting of at least two decoration elements (30,40) via an intermediate element (20) by means of a guiding means (10) according to one of the preceding claims, the method comprising the following steps:
abutting of a first decoration element (30) to a first stop surface (12) which is part of a planar extending stop side (12,14) of a guiding means (10),
abutting of a second decoration element (40) to a first stop surface (14) which is part of the stop side (12,14) of the guiding means (10),
inserting of the intermediate element (20) in a guiding rail (16) protruding from the stop side (12, 14) of the stop plate, comprising an interior space running along the stop side (12,14), with an inner extension corresponding at least partially to the outer contour of the intermediate element (20), wherein the guiding rail (16) closes the interior space with an end portion lying opposite to the stop side (12,14), and wherein the guiding rail (16) comprises an inlet opening (17) and an exit opening (18) for the intermediate element (20), each of which lying on lateral ends of the end portion, wherein the guiding means (10) comprises a compensation means (50) for compensating positional tolerances of the intermediate element (20) which is located between an area of the stop side (12, 14) lying between the first stop surface (12) and the second stop surface (14) and the intermediate element (20) inserted into the inner space,
simultaneous and continuous moving of the decoration elements (30, 40) and of the intermediate element (20) in a common direction, wherein the compensation means (50) exerts a force on the intermediate element (20) to press the intermediate element (20) against at least the end portion of the guiding rail (16), and in that way defines the position of the intermediate element (20) relative to the first stop surface (12) and to the second stop surface (14),
connecting of the decoration elements (30, 40) via the intermediate element (20) in moving direction of the decoration elements (30, 40) and the intermediate element (20) by means of a seam (N).

11. Method according to claim 10, wherein the connecting of the at least two decoration elements (30, 40) via intermediate element (20) is done by means of a seam (N).

12. Method according to claim 10 or 11, wherein the wherein the compensation means (50) comprises a spring element.

13. Method according to one of the claims 10 to 12, wherein the intermediate element (20) comprises a piping which lies on the visible side after the connection of the decoration elements (30, 40) with the intermediate element (20).

## Revendications

1. Moyen de guidage (10) pour l'insertion d'un élément intermédiaire (20) oblong entre au moins deux éléments de décoration (30, 40), en vue de relier ceux-ci, le moyen de guidage (10) comportant:
une plaque de butée avec une face de butée (12,14) s'étendant de façon planaire, constituée d'une première surface de butée (12) pour l'application d'un premier élément de décoration (30) et d'une deuxième surface de butée (14) pour l'application d'un deuxième élément de décoration (40),
un rail de guidage (16) faisant saillie à partir de la face de butée (12, 14) de la plaque de butée, avec un espace intérieur s'étendant le long de la face de butée (12,14), dont l'étendue intérieure correspond au moins partiellement au contour extérieur de l'élément intermédiaire (20), le rail de guidage (16) fermant l'espace intérieur avec une région terminale opposée à la face de butée (12, 14), et comportant une ouverture d'entrée (17) et une ouverture de sortie (18) pour l'élément intermédiaire (20), lesquelles sont respectivement situées à des extrémités latérales de la région terminale,
un moyen de compensation (50) pour la compensation de tolérances de position de l'élément intermédiaire (20), lequel se trouve entre une région de la face de butée (12,14) située entre la première surface de butée (12) et la deuxième surface de butée (14) et l'élément intermédiaire (20) inséré dans l'espace intérieur, pour maintenir l'élément intermédiaire (20) à distance de la face de butée, de manière à ce que le moyen de compensation (50) puisse exercer une force sur l'élément intermédiaire (20), pour presser l'élément intermédiaire (20) au moins contre la région terminale du rail de guidage (16) et ainsi définir la position relative de l'élément intermédiaire (20) par rapport à la première (12) et à la deuxième butée (14).

2. Moyen de guidage (10) selon la revendication 1, dans lequel le rail de guidage (16) entoure l'élément intermédiaire (20) sur trois côtés et le moyen de compensation (50) est prévu sur le quatrième côté.

3. Moyen de guidage (10) selon l'une des revendications précédentes, dans lequel l'assemblage entre les au moins deux éléments de décoration (30, 40) est réalisé par le biais de l'élément intermédiaire (20), au moyen d'une couture (N).

4. Moyen de guidage (10) selon l'une des revendications 1 à 3, dans lequel l'élément intermédiaire (20) comporte un liseré situé du côté visible après assemblage des éléments de décoration (30, 40) avec l'élément intermédiaire (20).

5. Moyen de guidage (10) selon l'une des revendications 1 à 3, dans lequel l'élément intermédiaire (20) comporte un bourrelet situé du côté visible après assemblage des éléments de décoration (30, 40) avec l'élément intermédiaire (20).

6. Moyen de guidage (10) selon l'une des revendications 1 à 3, dans lequel l'élément intermédiaire (20) comporte un passepoil situé du côté visible après assemblage des éléments de décoration (30, 40) avec l'élément intermédiaire (20).

7. Moyen de guidage (10) selon l'une des revendications précédentes, dans lequel le moyen de compensation (50) comporte un élément de ressort.

8. Moyen de guidage (10) selon l'une des revendications précédentes, dans lequel l'espacement entre l'ouverture de sortie (18) du rail de guidage (16) pour l'élément intermédiaire (20) et un lieu d'assemblage (110) mesure entre 1 à 10 fois l'épaisseur de matériau d'un élément de décoration (30, 40) lorsque le moyen de guidage (10) est inséré dans un dispositif d'assemblage (100).

9. Moyen de guidage (10) selon l'une des revendications précédentes, dans lequel la surface du moyen de compensation (50) présente un coefficient de friction par glissement inférieur à 0,70 par rapport à la surface de l'élément intermédiaire (20), au moins dans la région dans laquelle elle entre en contact avec l'élément intermédiaire (20).

10. Procédé pour l'assemblage d'au moins deux éléments de décoration (30, 40) par le biais d'un élément intermédiaire (20), au moyen d'un moyen de guidage (10) selon l'une des revendications précédentes, le procédé comportant les étapes suivantes :
application d'un premier élément de décoration (30) sur une première surface de butée (12) faisant partie d'une face de butée (12,14) d'un moyen de guidage (10), laquelle s'étend de façon planaire,
application du deuxième élément de décoration (40) sur une deuxième surface de butée (14) faisant partie de la face de butée (12, 14) du moyen de guidage (10),
insertion de l'élément intermédiaire (20) dans un rail de guidage (16) du moyen de guidage (10) faisant saillie à partir de la face de butée (12,14) de la plaque de butée, avec un espace intérieur s'étendant le long de la face de butée (12,14), dont l'étendue intérieure correspond au moins partiellement au contour extérieur de l'élément intermédiaire (20), le rail de guidage (16) fermant l'espace intérieur avec une région terminale opposée à la face de butée (12,14), et comportant une ouverture d'entrée (17) et une ouverture de sortie (18) pour l'élément intermédiaire (20), lesquelles sont respectivement situées à des extrémités latérales de la région terminale, le moyen de guidage (10) comportant un moyen de compensation (50) pour la compensation de tolérances de position de l'élément intermédiaire (20), lequel se trouve entre une région de la face de butée (12,14) située entre la première surface de butée (12) et la deuxième surface de butée (14) et l'élément intermédiaire (20) inséré dans l'espace intérieur,
déplacement simultané et continu des deux éléments de décoration (30, 40) et de l'élément intermédiaire (20) dans une direction commune, le moyen de compensation (50) exerçant une force sur l'élément intermédiaire (20), pour presser l'élément intermédiaire (20) au moins contre la région terminale du rail de guidage (16) et ainsi définir la position relative de l'élément intermédiaire (20) par rapport à la première (12) et à la deuxième butée (14),
assemblage des deux éléments de décoration (30,40) par le biais de l'élément intermédiaire (20) dans la direction de déplacement des éléments de décoration (30, 40) et de l'élément intermédiaire (20) au moyen de la couture (N).

11. Procédé selon la revendication 10, dans lequel l'assemblage entre les au moins deux éléments de décoration (30,40) est réalisé par le biais de l'élément intermédiaire (20), au moyen d'une couture (N).

12. Procédé selon l'une des revendications 10 ou 11, dans lequel le moyen de compensation (50) comporte un élément de ressort.

13. Procédé selon l'une des revendications 10 à 12, dans lequel l'élément intermédiaire (20) comporte un liseré situé du côté visible après assemblage des éléments de décoration (30, 40) avec l'élément intermédiaire (20).
